# EUROPÄISCHE PATENTSCHRIFT

(11) **EP 2 867 569 B1**
(45) Veröffentlichungstag und Bekanntmachung des Hinweises auf die Patenterteilung: **14.06.2017**
(21) Anmeldenummer: 13718595.5
(22) Anmeldetag: 29.04.2013
(51) Int. Cl.: F16L 37/098

(54) **STECKVERBINDER, INSBESONDERE FÜR MEDIENFÜHRENDE LEITUNGEN**
PLUG-IN CONNECTOR, IN PARTICULAR FOR MEDIA-CONDUCTING LINES
RACCORD ENFICHABLE UTILISÉ EN PARTICULIER POUR DES CONDUITES ACHEMINANT UN FLUIDE

(30) Priorität: 27.06.2012 DE 102012211035
(43) Veröffentlichungstag der Anmeldung: 06.05.2015
(73) Patentinhaber: Robert Bosch GmbH, 70442 Stuttgart (DE)
(72) Erfinder: ERHARDT, Uwe, 73760 Ostfildern (DE); BOTSCHKA, Michael, 73614 Schorndorf (DE)
(86) Internationale Anmeldenummer: PCT/EP2013/058863
(87) Internationale Veröffentlichungsnummer: WO 2014/000917

(56) Entgegenhaltungen:
- DE-A1-102009 028 473
- US-A- 4 026 581

## Beschreibung

### Stand der Technik

Die Erfindung bezieht sich auf einen Steckverbinder insbesondere für medienführende Leitungen nach der Gattung des Hauptanspruchs. Die Erfindung bezieht sich ferner auf einen Gegenstecker, insbesondere Injektorkörper, für einen derartigen Steckverbinder.

Derartige Steckverbinder werden beispielsweise in Kraftstoffeinspritzsystemen wie beispielsweise in Hochdruckspeichereinspritzsystemen oder in Kraftstoffrücklaufleitungen sowie in Hydraulikleitungen eingesetzt. Dazu weist ein derartiger Steckverbinder Leitungsanschlüsse zum Anschließen einer medienführenden Leitung auf. Zudem ist für den Einsatz in einem Kraftstoffeinspritzsystem am Steckerkörper eines derartigen Steckverbinders ein Anschluß zum Anschließen eines Kraftstoffinjektors ausgebildet. Zum Verbinden des Steckerkörpers mit dem Injektorkörper des Kraftstoffinjektors weist ein derartiger Steckverbinder üblicherweise einen Sicherungskörper auf, der am Steckerkörper beweglich aufgenommen ist und in dessen entriegelter Position der Steckerkörper ungesichert an dem Injektorkörper ist, während demgegenüber in dessen verriegelter Position der Injektorkörper am Anschluß des Steckerkörpers gesichert und fixiert ist.

Aus der DE 10 2006 061 952 A1 ist ein Steckverbinder für medienführende Leitungen wie beispielsweise Hydraulikleitungen oder Kraftstoffleitungen von Verbrennungsmotoren bekannt, der zur Befestigung in einer Öffnung eines Injektorkörpers eines Kraftstoffinjektors vorgesehen ist. Dabei umfasst der Steckverbinder einen Steckerkörper, an dem mindestens ein Rastelement ausgebildet ist und der mindestens einen Anschlussstutzen aufweist. Das mindestens eine Rastelement ist in einer Verriegelungsposition eines am Steckerkörper verschieblich aufgenommenen Sicherungsbügels in der Öffnung des Injektorskörpers arretiert. In einer Entriegelungsposition gibt der Sicherungsbügel das wenigstens eine Rastelement frei.

DE 10 2009 028 473 A1 offenbart einen Steckverbinder nach dem Oberbegriff des Anspruchs 1.

### Vorteile der Erfindung

Der Steckverbinder mit den kennzeichnenden Merkmalen des Patentanspruchs 1 hat den Vorteil, dass - im Vergleich zum Stand der Technik, bei dem während des Montagevorgangs des Steckerkörpers in dem zugeordneten Gegenstecker eine vorzeitige Auslösung des Sicherungskörpers aus seiner Entriegelungsposition und ein Übergang in die Verriegelungsposition erfolgen kann, bevor der Steckerkörper seine bestimmungsgemäße Rastposition in dem Gegenstecker erreicht - das Auslösen des Sicherungskörpers aus seiner Entriegelungsposition erfindungsgemäß erst dann erfolgen kann, wenn der Steckerkörper in seine bestimmungsgemäße Endposition in dem Gegenstecker gelangt, wobei das Rastelement des Steckerkörpers mit einer in dem Gegenstecker ausgebildeten Verrastungskontur zusammenwirkt und dadurch ein mit dem Rastelement gekoppeltes Blockierelement des Steckerkörpers in Reaktion auf dieses Zusammenwirken den Sicherungskörper aus seiner Entriegelungsposition freigibt, so dass mithin die für die Verriegelung des Sicherungskörpers erforderliche Relativtranslation des letzteren bezüglich des Steckerkörpers in Verriegelungsrichtung in Abhängigkeit vom Eintreten eines bestimmten Ereignisses, d.h. vom Einrastvorgang des Rastelements in der zugeordneten Verrastungskontur stattfindet, wodurch ein ungewolltes, verfrühtes Verriegeln des Sicherungskörpers aus seiner Entriegelungsposition gegen den Widerstand des den Sicherungskörper blockierenden Blockierelements praktisch nicht möglich ist.

Weitere vorteilhafte Weiterbildungen und Ausgestaltungen des erfindungsgemäßen Steckverbinders ergeben sich durch die in den Unteransprüchen aufgeführten Maßnahmen. Nach einer Weiterbildung der Erfindung weist das wenigstens eine Blockierelement eine Anschlagfläche auf, welche als Anschlag in Verriegelungsrichtung für eine an dem Sicherungskörper ausgebildete Rastnase dient. Dadurch sperrt das Blockierelement in dieser Stellung sperrklinkenartig eine Bewegung des Sicherungskörpers aus dessen Entriegelungsposition in Verriegelungsrichtung.

Vorteilhaft ist das Blockierelement mit dem Steckerkörper elastisch verbunden und bei Betätigung aufgrund der Kopplung des Rastelements mit dem Blockierelement wird das Blockierelement gegen den Steckerkörper bewegt, wodurch ein Spalt zwischen dem Blockierelement und dem Steckerkörper verengt und eine Bewegung des Sicherungskörpers in Verriegelungsrichtung gesperrt wird. Die Spaltbreite entspricht unter Berücksichtigung eines notwendigen Spiels im Wesentlichen der Dicke des in den Spalt einführbaren Bügelschenkels des Sicherungskörpers, wobei in einer Verriegelungsposition des Steckerkörpers in dem Gegenstecker ein Bügelschenkel in den Spalt zwischen dem Blockierelement und dem Steckerkörper soweit eingeführt ist, dass eine Bewegung des Blockierelements gegen den Steckerkörper gesperrt ist. Dadurch wird in dieser Verriegelungsposition des Steckverbinders, bei welcher der Steckerkörper und der Gegenstecker miteinander verbunden sind, ein unbeabsichtigtes Lösen bzw. Entriegeln des Steckverbinders verhindert.

Um während des Einkoppelns des Steckerkörpers in den Gegenstecker eine Bewegung des Sicherungskörpers in Verriegelungsrichtung zu erlauben, wird bei Betätigung des Rastelements eine Bewegung eines Bügelschenkels des Sicherungskörpers in den Spalt zwischen dem Blockierelement und dem Steckerkörper freigegeben. Gemäß einer Ausgestaltung der Erfindung ist in dem Gegenstecker eine der Verrastungskontur vorgeordnete Kontur so ausgeführt, dass die Kontur in einer Kontaktstellung das Rastelement radial zum benachbarten Spalt hin drängt, wobei das mit dem Rastelement gekoppelte Blockierelement den Spalt sperrt. Aus der Kontaktstellung gelangt das Rastelement in einer relaxierenden Bewegung in die Verrastungskontur, wobei das mit dem Rastelement gekoppelte Blockierelement den Spalt freigibt. Mithin ist die Betätigung des Rastelements durch die Kontur und die angrenzende Verrastungskontur des Gegensteckers festgelegt, indem das Rastelement in Einführrichtung des Steckerkörpers in einer ersten Stellung in Kontakt mit der vorgeordneten Kontur tritt und in einer zweiten Stellung, welche der bestimmungsgemäßen Verrastungsstellung entspricht, in die Verrastungskontur einrastet. Dabei führt das Rastelement zwei Bewegungen aus, nämlich in der Kontaktstellung aufgrund der Einwirkung der Kontur eine radial zum benachbarten Spalt hinweisende Bewegung und bei Erreichen der Verrastungskontur eine dazu gegenläufige, relaxierende Bewegung, die von dem Spalt wegführt. Aufgrund der Mitkopplung verengt das Blockierelement in der ersten Stellung den Spalt, während in der zweiten Stellung, bei welcher das Rastelement die Verrastungskontur erreicht, das Blockierelement den Spalt freigibt, so dass der Sicherungskörper in Verriegelungsrichtung bewegbar und schließlich verriegelbar ist.

Indem die Kontur in einer Öffnung des Gegensteckers radial umlaufend ausgebildet ist, erfolgt beim Einstecken der Steckerkörpers in den Gegenstecker eine sichere Kontaktierung des Rastelements an dieser Kontur. Um beim Übergang des Rastelements aus dessen Kontaktstellung an der Kontur in die Verrastungsstellung in der Verrastungskontur eine Einrastbewegung des Rastelements zu erlauben, ist die Verrastungskontur als in der Öffnung des Gegensteckers radial umlaufende Einbuchtung mit einem gegenüber dem umlaufenden Kontur größeren Durchmesser ausgebildet. Indem das Rastelement ein komplementär zum Profil der Verrastungskontur ausgebildetes Außenprofil aufweist, ist das Rastelement in der Verrastungsstellung des erfindungsgemäßen Steckverbinders formschlüssig aufgenommen. Nach einer vorteilhaften Ausgestaltung der Erfindung sind am Steckerkörper bezüglich dessen Symmetrieachse einander gegenüberliegende Blockierelemente ausgebildet, wobei jedes Blockierelement ein Rastelement trägt. Aufgrund des spiegelsymmetrischen Aufbaus des Steckerkörpers ist jedem der einander gegenüberliegenden Blockierelemente jeweils ein Bügelschenkel des Sicherungskörpers zugeordnet.

### Zeichnungen

Ein Ausführungsbeispiel der Erfindung ist in der nachfolgenden Beschreibung und in den beigefügten Zeichnungen näher erläutert. Letztere zeigen in stark schematisch gehaltenen Ansichten:

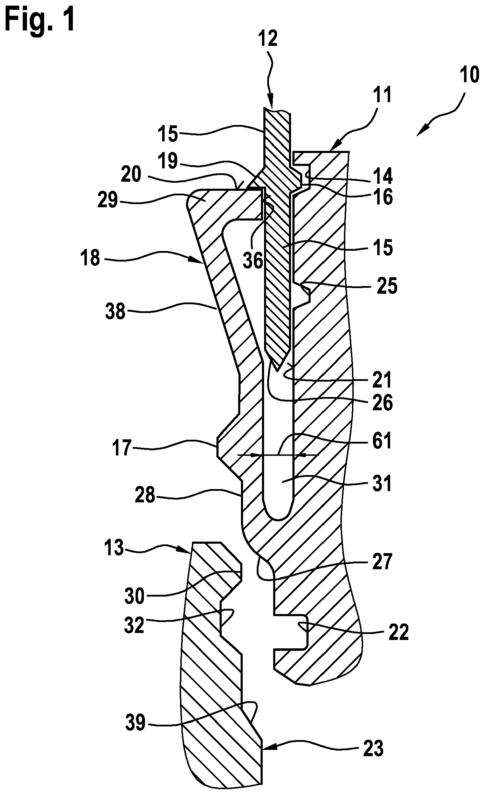

Fig. 1 eine Querschnittansicht einer linksseitigen Teildarstellung eines erfindungsgemäßen Steckverbinders mit einem Steckerkörper und einem Injektorkörper, wobei ein Sicherungskörper an dem Steckerkörper in einer oberen Anschlagstellung aufgenommen ist, welche der Entriegelungsstellung des Steckverbinders entspricht, und der Steckerkörper sich außerhalb einer Öffnung des Injektorkörpers befindet,

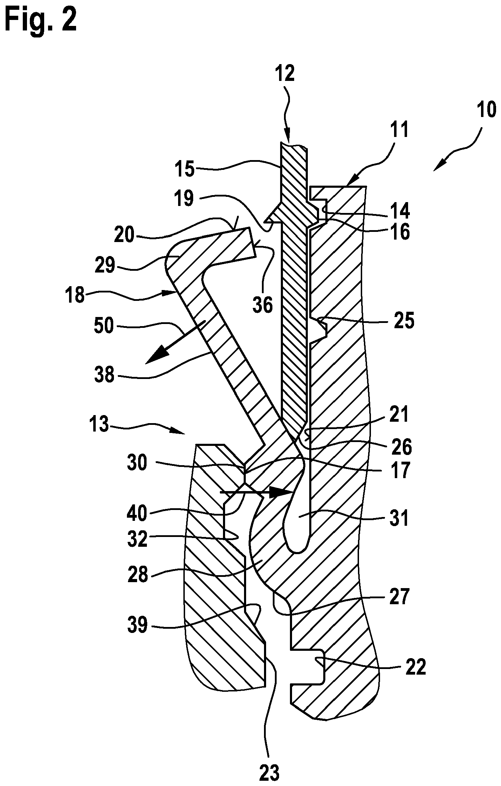

Fig. 2 eine Querschnittansicht des erfindungsgemäßen Steckverbinders in einer Teildarstellung analog Fig. 1, wobei der Steckerkörper in die Öffnung des Injektorkörpers soweit eintaucht, dass ein Arm des Steckerkörpers den Sicherungskörper freigibt, und

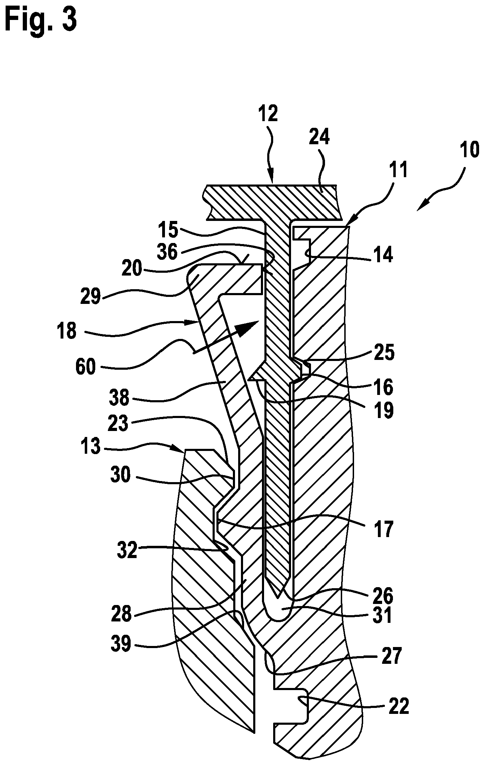

Fig. 3 eine Querschnittansicht des erfindungsgemäßen Steckverbinders in einer Teildarstellung analog Fig. 2, wobei der Steckerkörper in die Öffnung des Injektorkörpers eingetaucht ist und sich der Sicherungskörper in seiner unteren Anschlagstellung befindet, welche der Verriegelungsstellung des Steckverbinders entspricht.

### Beschreibung des Ausführungsbeispiels

Fig. 1 veranschaulicht in einer im Querschnitt gehaltenen Teilansicht einen in seiner Gesamtheit mit 10 bezeichneten erfindungsgemäßen Steckverbinder, der einen Steckerkörper 11, einen am Steckerkörper 11 zwischen einer Entriegelungsposition und einer Verriegelungsposition verschiebbar aufgenommenen Sicherungskörper 12 und einen Injektorkörper 13 als Gegenstecker aufweist, von denen in Fig.1 lediglich der jeweils linksseitige Teil dargestellt ist. Da der Steckverbinder 10 bezüglich seiner Längsmittelachse als Symmetrieachse spiegelsymmetrisch ausgebildet ist, ist der - in den Figuren nicht dargestellte - rechtsseitige Teil des Steckverbinders 10 spiegelsymmetrisch zum dargestellten linksseitigen Teil ausgebildet. Ferner sind in dieser Teilansicht aus Gründen der Übersichtlichkeit die Leitungsanschlüsse zum Anschließen einer medienführenden Leitung nicht dargestellt.

In Fig. 1 ist der Steckerkörper 11 des Steckverbinders 10 in einem von dem Injektorkörper 13 entkoppelten Zustand dargestellt, wobei der als Sicherungsbügel ausgebildete Sicherungskörper 12 an dem Steckerkörper 11 in einer der Entriegelungsstellung entsprechenden ersten Rastposition aufgenommen ist. Dazu weist der Steckerkörper 11 an jeder seiner beiden gegenüberliegenden Anlageflächen 21 jeweils ein obere Rastnut 14 auf. Der Sicherungskörper 12, von dem in Fig. 1 lediglich ein linksseitiger Bügelschenkel 15 dargestellt ist, der jedoch im wesentlichen U-förmig ausgebildet ist und einen Mittelsteg mit zwei sich von dessen Unterseite senkrecht wegerstreckenden und parallel zueinander angeordneten Bügelschenkeln aufweist, besitzt sowohl an dem linksseitigen Bügelschenkel 15 als auch an dem - nicht dargestellten - rechtsseitigen Bügelschenkel jeweils eine innenseitig angeordnete Rastnase 16, die in der Entriegelungsstellung des Steckverbinders 10 in der jeweils oberen Rastnut 14 des Steckerkörpers 11 verrastet ist, wobei die Innenseiten der beiden Bügelschenkel 15 des Sicherungskörpers 12 an den einander gegenüberliegenden Anlageflächen 21 des Steckerkörpers 11 anliegen.

Um den Steckerkörper 11 in einer Öffnung bzw. Aufnahmebohrung 23 des Injektorkörpers 13 zu verankern, weist der Steckerkörper 11 im bevorzugten Ausführungsbeispiel zwei Rastelemente 17 auf, die einander gegenüberliegend und symmetrisch zueinander bezüglich der Längsmittelachse des Steckerkörpers 11 angeordnet sind. Für jedes der zwei Rastelemente 17 ist sowohl an dem linksseitigen Teil als auch an dem - in den Figuren aus Gründen der Übersichtlichkeit nicht dargestellten - rechtsseitigen Teil des Steckerkörpers 11 jeweils ein Blockierelement angeformt, das als Arm 18 ausgebildet ist. Jeder Arm 18 erstreckt sich von einem jeweiligen Ansatz 27, der im unteren Bereich des Steckerkörpers 11 angeformt ist, nach oben in Richtung des oberen Bereichs des Steckerkörpers 11 und besitzt in seinem unteren Armabschnitt 28 ein nach außen ragendes Rastelement 17. Dabei ist jeder Arm 18 mit dem daran jeweils angeformten Rastelement 17 durch einen schlitzförmigen Spalt 31 von der Mantelfläche 21 des Steckerkörpers 11 getrennt. Oberhalb des Rastelements 17 erstreckt sich ein länglich ausgebildeter oberer Armabschnitt 38, an den sich ein abgewinkelter Endabschnitt 29 anschließt. Der Endabschnitt 29 ist derart von dem oberen Armabschnitt 38 abgewinkelt, dass er dem benachbarten Bügelschenkel 15 des Sicherungskörpers 12 zugewandt und etwa orthogonal zu diesem Bügelschenkel 15 ausgerichtet ist. Die quer zur längsaxialen Erstreckung des Steckerkörpers verlaufende Länge des abgewinkelten Endabschnitts 29 ist dabei so bemessen, dass die Endfläche 36 in entspannter Ruhestellung des Arms 18 an der Außenseite des zugeordneten Bügelschenkels 15 plan anliegt. Ferner ist am jeweiligen Endabschnitt 29 eines Arms 18 jeweils eine obere Anschlagfläche 20 ausgebildet, die rechtwinklig zur unmittelbar angrenzenden Endfläche 36 verläuft und in Ruhestellung des Arms 18 als Anschlag für eine jeweils dazu korrespondierende Rastnase 19 des Sicherungskörpers 12 dient. Diese Rastnase 19 ist derart an der Außenseite des jeweiligen Bügelschenkels 15 des Sicherungskörpers 12 vorstehend angeordnet, dass in der Ruheposition des jeweiligen Arms 18 die zugeordnete Rastnase 19 des Sicherungskörpers 12 mit ihrer Unterseite formschlüssig an der nach oben weisenden Anschlagfläche 20 des Arms 18 anliegt, so dass eine Abwärtsbewegung des Sicherungskörpers 12 aus dessen Entriegelungsstellung heraus in eine zweite Rastnut 25 des Steckerkörpers 11 blockiert ist und somit jeder der beiden Arme 18 des Steckerkörpers 11 mit seinem oberen Armabschnitt 38 und dem abgewinkelten Endabschnitt 29 oberhalb des jeweiligen Rastelements 17 den Sicherungskörper 12 sperrklinkenartig blockiert. Aufgrund der Spiegelsymmetrie des Steckverbinders 10 bezüglich seiner Längsmittelachse weist somit der Sicherungskörper 12 im bevorzugten Ausführungsbeispiel zwei Rastnasen 19 auf, die mit der jeweils zugeordneten Anschlagfläche 20 des jeweiligen Arms 18 korrespondieren. Im unteren Abschnitt des Steckerkörpers 11 ist eine radial umlaufende Aufnahmenut 22 vorgesehen, die zur Aufnahme eines - in der Figur nicht dargestellten - Dichtrings dient, wodurch im gekoppelten Zustand des Steckverbinders 10 eine dichtende Verbindung zwischen Steckerkörper 11 und Injektorkörper 13 sichergestellt wird.

Fig. 2 veranschaulicht den erfindungsgemäßen Steckverbinder 10 in einer linksseitigen Teilansicht analog zu dem in Fig. 1 dargestellten Ausschnitt und zwar in einer intermediären Stellung während des Kopplungsvorgangs, bei dem der Steckerkörper 11 in die Öffnung bzw. Aufnahmebohrung 23 des Injektorkörpers 13 soweit eintaucht, dass das nach außen ragende Rastelement 17 des Steckerkörpers 11 in - im wesentlichen lateral wirkenden - Druckkontakt mit einem als Kontur ausgebildeten radial umlaufenden Vorsprung 30 im Mündungsbereich der Öffnung bzw. Aufnahmebohrung 23 gerät. Da zwischen dem unteren Armabschnitt 28, an dessen Außenseite das jeweilige Rastelement 17 wulstartig angeformt ist, und dem dazu von der angrenzenden Anlagefläche 21 gebildeten Mantelabschnitt des Steckerkörpers 11 der schlitzförmige Spalt 31 ausgebildet ist, weicht jedes der beiden einander gegenüberliegenden Rastelemente 17 bei Kontakt mit dem Vorsprung 30 in der Öffnung 23 des Injektorkörpers 13 aufgrund des dadurch lateral wirkenden Drucks und der elastischen Ausbildung der beiden Arme 18 in deren jeweils unteren Armabschnitt 27, 28 nach innen in den jeweiligen Spalt 31 gemäß der in Fig. 2 dargestellten Bewegungsrichtung 40 aus. Da die vertikale Länge des jeweiligen Bügelschenkels 15 des Sicherungskörpers 12, d.h. die Länge zwischen der innenseitigen Rastnase 16 und dem freien Ende 26 des jeweiligen Bügelschenkels 15, so bemessen ist, dass das freie Ende 26 bis an das Rastelement 17 heranreicht, während die Dicke des Bügelschenkels 15 in dazu transversaler Richtung etwa der radialen Weite des Spalts 31 entspricht, bildet das freie Ende 26 des Bügelschenkels 15 ein Widerlager bzw. Auflager für einen an das Rastelement 17 oberhalb angrenzenden Armabschnitt 38 des jeweiligen Arms 18, wenn das Rastelement 17 bei Kontakt mit dem umlaufenden Vorsprung 30 in der Öffnung 23 in den Spalt 31 eingedrückt bzw. eingezwängt wird und dadurch der oberhalb an das Rastelement 17 angrenzende Armabschnitt 38 an seiner dem Rastelement 17 abgewandten Seite gegen eine am freien Ende 26 des Bügelschenkels ausgebildete Anschrägung zur Anlage kommt. Dabei verbiegt sich der jeweilige Arm 18 unter Einwirkung des konturierten Vorsprungs 30 auf das Rastelement 17 hebelartig, indem die freie Endfläche 26 des Bügelschenkels 15 als Widerlager fungiert und einen gelenkartigen Angelpunkt des jeweiligen Arms definiert. Gleichzeitig mit der Auslenkung des das Rastelement 17 tragenden unteren Armabschnitts 28 erfolgt eine dazu gegenläufige Auslenkbewegung 50 des sich oberhalb des Rastelements 17 bzw. oberhalb des Angelpunkts erstreckenden Armbereichs 38, so dass dieser Armbereich 38 des Arms 18 mit der endseitigen Anschlagfläche 20 aus seiner- in Fig. 1 dargestellten - Ruhestellung ausgespreizt wird und von der benachbarten Anlageseite 21 des Steckerkörpers 11 mit dem daran anliegenden Bügelschenkel 15 des Sicherungskörpers 12 nach außen wegschwenkt. In dieser ausgelenkten Stellung des jeweiligen Arms 18 kommt die außenseitig an dem zugeordneten Bügelschenkel 15 vorstehende Rastnase 19 frei. Indem der formschlüssige Anschlag der Rastnase 19 des Sicherungskörpers 12 an der Anschlagfläche 20 des Arms 18 des Steckerkörpers 11 aufgrund der elastischen Auslenkung des Arms 18 aus seiner Ruhestellung freigegeben wird, ist es in dieser Stellung des Steckerkörpers 11 bezüglich des Injektorkörpers 13 möglich, den Sicherungskörper 12 aus seiner Entriegelungsstellung, welche durch die erste Rastnut 14 definiert ist, zu lösen und in die Verriegelungsstellung, die durch die zweite Rastnut 25 definiert ist, zu schieben, indem Druck auf den Mittelsteg 24 (vgl. Fig. 3) des Sicherungskörpers 12 in Abwärtsrichtung, d.h. in Verriegelungsrichtung, ausgeübt wird. Dazu ist der jeweilige Arm 18 so ausgelegt, dass der sich oberhalb des Angelpunkts erstreckende obere Armabschnitt 38 mit dem abgewinkelten Endabschnitt 29, der Anschlagfläche 20 und der Endfläche 36 starr ausgebildet ist, um in Ausgangsstellung eine optimale Sperrfunktion sicherzustellen, während der untere Armabschnitt 27, 28 mit dem Rastelement 17 elastisch federnd ausgebildet ist. Da der Steckerkörper 11 vorzugsweise als Kunststoffteil im Spritzgussverfahren gefertigt wird, wird die elastisch federnde Ausbildung des entsprechenden Armabschnitts erzielt, indem dieser Armabschnitt deutlich dünner als der übrige Armabschnitt ausgeführt wird.

Fig. 3 veranschaulicht den erfindungsgemäßen Steckverbinder 10 in einer ebenfalls linksseitigen Teilansicht analog zu dem in Fig. 2 dargestellten Ausschnitt und zwar im bestimmungsgemäß gekoppelten Zustand des Steckverbinders 10, bei dem der Steckerkörper 11 aus seiner in Fig. 2 dargestellten intermediären Stellung in einer weiteren Abwärtsbewegung in Verriegelungsrichtung in seine bestimmungsgemäße Endstellung bzw. Rastposition innerhalb des Injektorkörpers 13 verschoben ist. Diese Endstellung ist durch eine Verrastungskontur 32 definiert, die als eine radial umlaufende Einbuchtung bzw. Durchmesservergrößerung in der Öffnung 23 des Injektorkörpers 13 ausgeführt ist. Indem die Durchmesservergrößerung 32 unmittelbar unterhalb des in der Öffnung 23 umlaufenden Vorsprungs 30 angeordnet ist, gerät das Rastelement 17 des jeweiligen Arms 18 beim in Abwärtsrichtung er-folgenden Einschieben des Steckerkörpers 11 in die Öffnung 23 aus der Druckzone des - im Vergleich zur Verrastungskontur 32 - durchmesserkleineren Vorsprungs 30 in die Zone der unmittelbar nachgeordneten Durchmesservergrößerung 32, so dass das zuvor in den jeweiligen Spalt 31 eingedrückte bzw. elastisch ausgelenkte Rastelement 17 mit einer Rückstellbewegung in die Einbuchtung der Durchmesservergrößerung 32 einschnappt. Praktisch gleichzeitig mit der Rückstellbewegung des Rastelements 17 in seine radiale Ausgangsstellung wird der zuvor verengte Spalt 31 in seiner ursprünglichen - radialen - Weite 61 wieder frei, so dass das zuvor als Widerlager am entsprechenden Armabschnitt 38 des jeweiligen Arms 18 anliegende freie Ende 26 des zugeordneten Bügelschenkels 15 in den freigegebenen Spalt 31 eintauchen kann, bevor der zuvor aus seiner Sperrstellung ausgelenkte obere Armabschnitt 38 des Arms 18 in seine - entspannte - Ruhestellung zurückschwenken kann.

Aufgrund des beim Kopplungsvorgang vertikal auf den Mittelsteg 24 des Sicherungskörpers 12 in Abwärtsrichtung bzw. Kopplungsrichtung ausgeübten Drucks gleitet jeder der Bügelschenkel 15 entlang der entsprechenden Anlagefläche 21 des Steckerkörpers 11 nach unten, wobei die entsprechende Rastnase 16 des Sicherungskörpers 12 aus ihrer Raststellung in der jeweils zugeordneten ersten Rastnut 14 des Steckerkörpers herausgleitet, und der zuvor von dem aus seiner Ruhestellung ausgelenkten Arm 18 freigegebene Bügelschenkel 15 mit seinem freien Ende 26 in den zugeordneten Spalt 31 eintaucht, bis die Rastnase 16 die zweite Rastnut 25 in der Anlageseite 21 erreicht und dort rastend einschnappt. Bereits während dieses Eintauchens des Bügelschenkels 15 in den Spalt 31 schwenkt der obere Armabschnitt 38 des Arms 18 gemäß der zur angrenzenden Anlagefläche 21 hinweisenden Bewegungsrichtung 60 in seine unverspannte Ruhestellung zurück, da die zuvor vom Vorsprung 30 auf das Rastelement vermittelte Krafteinwirkung und somit die Hebelwirkung des durch die vorherige Position des Bügelschenkels 15 definierten Widerlagers an der dem Rastelement 17 abgewandten Seite des entsprechenden Armabschnitts fehlt. Indem die Rastnase 16 eine im Querschnitt trapezförmig ausgebildete Kontur und die zweite Rastnut 25 eine dazu komplementäre Gegenkontur aufweist, ist der Sicherungskörper 12 in dieser Raststellung, welche die Verriegelungsstellung definiert, formschlüssig verrastet. Analog dazu weist auch das als Wulst ausgebildete Rastelement 17 eine im Querschnitt trapezförmige Kontur auf, die komplementär zu der ebenfalls trapezförmigen Gegenkontur der Durchmesservergrößerung 32 ausgebildet ist, so dass der Steckerkörper 11 in dem Injektorkörper 13 in dem bestimmungsgemäß vorgesehenen Kopplungszustand des Steckverbinders 10 formschlüssig verrastet ist.

Um die in Fig. 3 veranschaulichte Verriegelung des Steckverbinders 10 wieder zu lösen, wird Zug auf den Sicherungskörper 12 in Entriegelungsrichtung ausgeübt, wodurch die jeweilige in der zugeordneten zweiten Rastnut 25 verrastete Rastnase 16 ausklinkt und beim Hochgleiten der Bügelschenkel des Sicherungskörpers 12 entlang der gegenüberliegenden Anlageflächen 21 in die erste Rastposition die freie Endfläche 36 des jeweiligen Arms 18 über die sich rampenförmig nach oben verjüngende Oberseite der Rastnase 19 rutscht. Dabei erfährt der obere Armabschnitt 38 des Arms 18 eine geringe laterale Auslenkung durch die sich nach oben rampenförmig verjüngende Oberseite und kommt dann aufgrund seiner Rückstellung mit seiner Endfläche 36 an der Unterseite der Rastnase 19 wieder in Anschlagstellung, wenn die im bevorzugten Ausführungsbeispiel auf derselben lateralen Ebene gegenüberliegende Rastnase 16 in der Rastnut 14 einrastet. Da in dieser Entriegelungsstellung, in welcher sich nunmehr der Sicherungskörper befindet, die Bügelschenkel 15 des Sicherungskörpers 12 aus dem jeweiligen Spalt 31 zurückgezogen sind und somit jeder der Spalte 31 freigegeben ist, kann durch weiter auf den Sicherungskörper 12 ausgeübtem Zug jedes der Rastelemente 17 aus der Verrastungskontur 32 des Injektorkörpers 13 ausklinken, so dass der Sicherungskörper 12 zusammen mit dem Steckerkörper 11 aus dem Injektorkörper 13 in Entriegelungsrichtung herausziehbar ist. Da die jeweilige erste Rastnut 14, in der sich dabei die jeweils zugeordnete Rastnase 16 des Sicherungskörpers 12 befindet, - im Gegensatz zur jeweiligen zweiten Rastnut 25, bei der sowohl die Unterkante als auch die Oberkante als Schrägflächen ausgebildet sind - eine rechtwinklig zur Innenseite der Rastnut 14 verlaufende Oberkante aufweist, wird ein ungewolltes Ausklinken der jeweiligen Rastnase 16 aus der ersten Raststellung während der Aufwärtsbewegung des Sicherungskörpers 12 und damit ein Lösen des Sicherungskörpers 12 vom Steckerkörper 11 praktisch vermieden. In dieser Position ist die in Fig. 1 veranschaulichte Ausgangsstellung bzw. Ruhestellung wieder erreicht.

Indem der erfindungsgemäße Steckverbinder 10 spiegelsymmetrisch bezüglich seiner Längsmittelachse als Symmetrieachse ausgebildet ist und im bevorzugten Ausführungsbeispiel zwei bezüglich der Längsmittelachse einander gegenüberliegende Arme 18 am Steckerkörper angeformt sind, gelten die bezüglich des linksseitigen Teils des Steckverbinders geltenden Ausführungen in analoger Weise ebenso für den - in den Figuren aus Gründen der Übersichtlichkeit nicht dargestellten - rechtsseitigen Teil. Demgemäß weist jeder der beiden Arme 18 jeweils ein Rastelement 17 auf und jeder der beiden Bügelschenkel 15 des Sicherungskörpers 11 besitzt sowohl eine schenkelaußenseitig angeformte Rastnase 19 als auch eine schenkelinnenseitig angeformte Rastnase 16, die in derselben lateralen Ebene angeordnet sind, wobei an jeder der einander gegenüberliegenden Anlageflächen 21 des Steckerkörpers 11 eine erste Rastnut 14 und eine zweite Rastnut 25 vorgesehen sind. Der Injektorkörper 13 weist im Mündungsbereich der Öffnung 23 eine umlaufende Anschrägung auf, um das Einführen des Steckerkörpers 11 zu erleichtern. Nachgeordnet zu dieser Anschrägung sind in der Öffnung 23 der umlaufende Vorsprung 30 und die umlaufende Verrastungskontur 32 ausgebildet, wobei die Verrastungskontur 32 als umlaufende Einbuchtung bzw. Nut mit trapezförmigem Profil und einem gegenüber dem umlaufenden Vorsprung 30 größeren Durchmesser ausgeführt ist.

Die Spalte zwischen der Anlagefläche 21, dem Bügelschenkel 15, dem unteren Armabschnitt und der Verrastungskontur 32 sind so bemessen, dass der Bügelschenkel 15 so weit aufgespreizt werden kann, dass die Rastnase 16 die Nuten 25 und 14 verlassen kann. Der Bügelschenkel 15 muss also auch flexibel sein.

Zusammenfassend ist für den erfindungsgemäßen Steckverbinder 10 mithin charakteristisch, dass an dem Steckerkörper 11 wenigstens ein Arm 18 angeordnet ist, welcher mit dem wenigstens einen Rastelement 17 gekoppelt ist und welcher den am Steckerkörper 11 verschiebbar aufgenommenen Sicherungskörper 12 in dessen Entriegelungsstellung bezüglich einer Relativbewegung in Verriegelungsrichtung gegenüber dem Steckerkörper 11 solange sperrt, bis das wenigstens eine Rastelement 17 beim Einstecken des Steckerkörpers 11 in die Öffnung 23 des Injektorkörpers 13 eine in der Öffnung 23 ausgebildete Verrastungskontur 32 erreicht (Fig. 3), wobei der wenigstens eine Arm 18 in Reaktion auf ein Einrasten des Rastelements 17 in die Verrastungskontur 32 den Sicherungskörper 12 in Verriegelungsrichtung freigibt. Bei während des Eintauchens des Steckerkörpers 11 in den Injektorkörper 13 erfolgendem Kontakt des Rastelements 17 mit einem in der Öffnung 23 des Injektorkörpers 13 ausgebildeten und der Verrastungskontur 31 unmittelbar vorgeordneten Vorsprung 30 (Fig. 2) erfährt der Arm 18 aufgrund der beim Kontakt auf das Rastelement 17 wirkenden Kraft eine elastische Verformung, wobei ein das Rastelement 17 tragender Armabschnitt den angrenzenden Spalt 31 versperrt und ein daran angrenzender Armabschnitt gelenkartig an dem freien Ende eines Schenkels 15 des Sicherungskörpers 12 anliegt, während ein Endabschnitt 20 des Arms 18 in einer radial nach außen führenden Auslenkbewegung von der Rastnase 19 wegschwenkt.

Indem dadurch im von dem zugehörigen Injektorkörper bzw. Gegenstecker 13 getrennten Zustand des Steckerkörpers 11 die Sperrfunktion des jeweiligen Arms 18 mittels einer ersten Armstellung (Fig. 1) ausgeübt wird, bei welcher der jeweilige Arm 18 entspannt ist und ein Armabschnitt in einer Anschlagposition zu einer an einem Bügelschenkel 15 des Sicherungskörpers 12 angeformten Rastnase 19 angestellt ist, wird beim Eintauchen bzw. Einstecken des Steckerkörpers 11 in den Injektorkörper 13 die Sperrfunktion des jeweiligen Arms 18 mittels einer zweiten Armstellung (Fig. 2) ausgeübt, bei welcher der jeweilige Arm 18 elastisch verspannt ist und ein anderer Armabschnitt den Sicherungskörper 12 in Verriegelungsrichtung so blockiert, dass ein entsprechender Spalt 31 abgesperrt wird, der in Verriegelungsstellung zur Aufnahme eines zugeordneten Bügelschenkels 15 des Sicherungskörpers 12 dient. Die anschließende Relaxation des jeweiligen Arms 18 (Fig. 3), die beim Übergang in die durch die Verrastungskontur 32 festgelegte Verriegelungsposition erfolgt, hebt die durch die zweite Armstellung vermittelte Sperrfunktion auf, wobei der jeweilige Bügelschenkel 15 des Sicherungskörpers 12 in den jeweils freiwerdenden Spalt 31 unter gleichzeitigem Ausspreizen des jeweiligen mit dem Rastelement 17 versehenen Armabschnitts eintauchen kann, so dass mithin die Verriegelung des Sicherungskörpers 12 in der korrekten Montageposition des Steckerkörpers 11 im Injektorkörper 13 erfolgt.

## Patentansprüche

1. Steckverbinder insbesondere für medienführende Leitungen, zur Befestigung in einem Gegenstecker, insbesondere in einem Injektorkörper eines Kraftstoffinjektors, mit einem Steckerkörper, der wenigstens ein Rastelement aufweist, und einem am Steckerkörper beweglich aufgenommenen Sicherungskörper, der dazu dient, in einer Verriegelungsposition das mindestens eine Rastelement in dem Gegenstecker zu sichern, wobei an dem Steckerkörper (11) wenigstens ein Blockierelement (18) angeordnet ist, welches mit dem wenigstens einen Rastelement (17) gekoppelt ist und den Sicherungskörper (12) in dessen Entriegelungsstellung bezüglich einer Relativbewegung in Verriegelungsrichtung gegenüber dem Steckerkörper (11) solange sperrt, bis das wenigstens eine Rastelement (17) beim Einstecken des Steckerkörpers (11) in den Gegenstecker (13) eine in dem Gegenstecker ausgebildete Verrastungskontur (32) erreicht, wobei das wenigstens eine Blockierelement (18) in Reaktion auf ein Einrasten des Rastelements (17) in die Verrastungskontur (32) den Sicherungskörper (12) in Verriegelungsrichtung freigibt,
**dadurch gekennzeichnet, dass** ein Blockierelementabschnitt gelenkartig an dem freien Ende (26) eines Bügelschenkels (15) des Sicherungskörpers (12) anliegt, während ein mit einer Anschlagfläche (20) versehener Endabschnitt (29,38) des Blockierelements (18) in einer radial nach außen führenden Auslenkbewegung von dem Steckerkörper (11) wegschwenkt.

2. Steckverbinder nach Anspruch 1, **dadurch gekennzeichnet, dass** das wenigstens eine Blockierelement (18) eine Anschlagfläche (20) aufweist, welche als Anschlag in Verriegelungsrichtung für eine am Sicherungskörper (12) ausgebildete Rastnase (19) dient.

3. Steckverbinder nach Anspruch 1 oder 2, **dadurch gekennzeichnet, dass** das Blockierelement (18) über das Rastelement (17) mit dem Steckerkörper (11) elastisch verbunden ist, so dass bei Betätigung des Rastelements (17) beim Einstecken des Steckerkörpers (11) in den Gegenstecker (13) aufgrund der Kopplung des Rastelements (17) mit dem Blockierelement (18) das Blockierelement (18) im Bereich des Rastelements (17) gegen den Steckerkörper (11) bewegt wird.

4. Steckverbinder nach einem der vorhergehenden Ansprüche, **dadurch gekennzeichnet, dass** bei Betätigung des Rastelements (17) eine Bewegung eines Bügelschenkels (15) des Sicherungskörpers (12) in einen Spalt (31) zwischen dem Blockierelement (18) und dem Steckerkörper (11) im Bereich des Rastelements (17) freigegeben wird.

5. Steckverbinder nach Anspruch 4, **dadurch gekennzeichnet, dass** die Breite (61) eines Spalts (31) zwischen dem Blockierelement (18) und dem Rastelement (17) einerseits und dem Steckerkörper (11) andererseits unter Berücksichtigung eines notwendigen Spiels im Wesentlichen der Dicke des in den Spalt (31) einführbaren Bügelschenkels (15) des Sicherungskörpers (12) entspricht und in Verriegelungsposition des Steckerkörpers (11) in dem Gegenstecker (13) der Bügelschenkel (15) in den Spalt (31) zwischen dem Blockierelement (18) und dem Steckerkörper (11) soweit eingeführt ist, dass eine Bewegung des Blockierelements (18) im Bereich des Rastelements (17) gegen den Steckerkörper (11) gesperrt ist.

6. Steckverbinder nach einem der Ansprüche 1 bis 5, **dadurch gekennzeichnet, dass** das wenigstens eine Rastelement (17) ein komplementär zum Profil der Verrastungskontur (32) ausgebildetes Außenprofil aufweist.

7. Steckverbinder nach einem der Ansprüche 1 bis 6, **dadurch gekennzeichnet, dass** am Steckerkörper (11) bezüglich dessen Symmetrieachse einander gegenüberliegende Blockierelemente (18) ausgebildet sind, wobei jedes Blockierelement ein Rastelement (17) trägt.

8. Steckverbindungsanordnung mit einem Steckverbinder nach Anspruch 4 oder 5 und mit einem Gegenstecker, insbesondere Injektorkörper, für den Steckverbinder, **dadurch gekennzeichnet, dass** in dem Gegenstecker (13) eine der Verrastungskontur (32) in Entriegelungsrichtung vorgeordnete Kontur (30) so ausgeführt ist, dass in einer Kontaktstellung des Rastelements (17) die Kontur
(30) das Rastelement (17) radial zum benachbarten Spalt (31) hin drängt, wobei das mit dem Rastelement (17) gekoppelte Blockierelement (18) im Bereich des Rastelements (17) den Spalt (31) sperrt.

9. Steckverbindungsanordnung nach Anspruch 8, **dadurch gekennzeichnet, dass** die Kontur (30) in einer Öffnung (23) des Gegensteckers (13) radial umlaufend ausgebildet ist.

10. Steckverbindungsanordnung nach Anspruch 9, **dadurch gekennzeichnet, dass** die Verrastungskontur (32) als in der Öffnung (23) des Gegensteckers (13) radial umlaufende Einbuchtung mit einem gegenüber der umlaufenden Kontur (30) größeren Durchmesser ausgebildet ist.

## Claims

1. Plug connector, in particular for media-carrying lines, for fastening in a mating plug, in particular in an injector body of a fuel injector, comprising a plug body, which has at least one latching element, and a securing body which is held in a movable manner on the plug body and serves to secure the at least one latching element in the mating plug in a locking position, wherein at least one blocking element (18) is arranged on the plug body (11) and is coupled to the at least one latching element (17) and blocks the securing body (12) in its unlocking position with respect to a relative movement in the locking direction in relation to the plug body (11) until the at least one latching element (17) reaches a latching contour (32), which is formed in the mating plug, when the plug body (11) is plugged into the mating plug (13), wherein the at least one blocking element (18) releases the securing body (12) in the locking direction in response to the latching element (17) latching into the latching contour (32),
**characterized in that** a blocking element section bears in an articulated manner against the free end (26) of a clip limb (15) of the securing body (12), whereas an end section (29, 38) of the blocking element (18), which end section is provided with a stop face (20), pivots away from the plug body (11) with a radially outward deflection movement.

2. Plug connector according to Claim 1, **characterized in that** the at least one blocking element (18) has a stop face (20) which serves as a stop in the locking direction for a latching lug (19) which is formed on the securing body (12).

3. Plug connector according to Claim 1 or 2, **characterized in that** the blocking element (18) is elastically connected to the plug body (11) by means of the latching element (17), so that, when the latching element (17) is operated when the plug body (11) is plugged into the mating plug (13), the blocking element (18) is moved towards the plug body (11) in the region of the latching element (17) on account of the coupling of the latching element (17) to the blocking element (18).

4. Plug connector according to one of the preceding claims, **characterized in that**, when the latching element (17) is operated, a movement of a clip limb (15) of the securing body (12) into a gap (31) between the blocking element (18) and the plug body (11) in the region of the latching element (17) is enabled.

5. Plug connector according to Claim 4, **characterized in that** the width (61) of a gap (31) between the blocking element (18) and the latching element (17) on the one hand and the plug body (11) on the other hand, taking into account a necessary play, corresponds substantially to the thickness of the clip limb (15) of the securing body (12), which clip limb can be inserted into the gap (31), and the clip limb (15) is inserted into the gap (31) between the blocking element (18) and the plug body (11) in the locking position of the plug body (11) in the mating plug (13) to such an extent that a movement of the blocking element (18) towards the plug body (11) in the region of the latching element (17) is blocked.

6. Plug connector according to one of Claims 1 to 5, **characterized in that** the at least one latching element (17) has an external profile which complements the profile of the latching contour (32).

7. Plug connector according to one of Claims 1 to 6, **characterized in that** blocking elements (18) which are opposite one another are formed on the plug body (11) with respect to its axis of symmetry, wherein each blocking element has a latching element (17).

8. Plug connection arrangement comprising a plug connector according to Claim 4 or 5 and comprising a mating plug, in particular injector body, for the plug connector, **characterized in that** a contour (30) which is arranged in front of the latching contour (32) in the unlocking direction is designed in the mating plug (13) such that, in a contact position of the latching element (17), the contour (30) pushes the latching element (17) radially in relation to the adjacent gap (31), wherein the blocking element (18) which is coupled to the latching element (17) blocks the gap (31) in the region of the latching element (17).

9. Plug connection arrangement according to Claim 8, **characterized in that** the contour (30) is formed in a radially circumferential manner in an opening (23) in the mating plug (13).

10. Plug connection arrangement according to Claim 9, **characterized in that** the latching contour (32) is formed as a radially circumferential recess in the opening (23) in the mating plug (13) with a larger diameter than the circumferential contour (30).

## Revendications

1. Connecteur enfichable, en particulier pour des conduites acheminant des fluides, pour la fixation dans un connecteur conjugué, en particulier dans un corps d'injecteur d'un injecteur de carburant, comprenant un corps de connecteur qui présente au moins un élément d'encliquetage, et un corps de fixation reçu de manière déplaçable sur le corps de connecteur, qui, dans une position de verrouillage, sert à fixer l'au moins un élément d'encliquetage dans le connecteur conjugué, au moins un élément de blocage (18) étant disposé sur le corps de connecteur (11), lequel est accouplé à l'au moins un élément d'encliquetage (17) et bloque le corps de fixation (12) dans sa position de déverrouillage par rapport à un déplacement relatif dans la direction de verrouillage par rapport au corps de connecteur (11) jusqu'à ce qu'au moins un élément d'encliquetage (17), lors de l'enfichage du corps de connecteur (11) dans le connecteur conjugué (13), atteigne un contour d'encliquetage (32) réalisé dans le connecteur conjugué, l'au moins un élément de blocage (18), en réaction à un encliquetage de l'élément d'encliquetage (17) dans le contour d'encliquetage (32), libérant le corps de fixation (12) dans la direction de verrouillage,
**caractérisé en ce qu'**une portion de l'élément de blocage s'applique à la manière d'une articulation contre l'extrémité libre (26) d'une branche d'étrier (15) du corps de fixation (12), tandis qu'une portion d'extrémité (29, 38) de l'élément de blocage (18) pourvue d'une surface de butée (20) pivote à l'écart du corps de connecteur (11) dans un mouvement de déviation conduisant radialement vers l'extérieur.

2. Connecteur enfichable selon la revendication 1, **caractérisé en ce que** l'au moins un élément de blocage (18) présente une surface de butée (20) qui sert de butée dans la direction de verrouillage pour un ergot d'encliquetage (19) réalisé sur le corps de fixation (12).

3. Connecteur enfichable selon la revendication 1 ou 2, **caractérisé en ce que** l'élément de blocage (18) est raccordé élastiquement au corps de connecteur (11) par le biais de l'élément d'encliquetage (17), de sorte que lors de l'actionnement de l'élément d'encliquetage (17) lors de l'enfichage du corps de connecteur (11) dans le connecteur conjugué (13), en raison de l'accouplement de l'élément d'encliquetage (17) avec l'élément de blocage (18), l'élément de blocage (18) soit déplacé dans la région de l'élément d'encliquetage (17) vers le corps de connecteur (11).

4. Connecteur enfichable selon l'une quelconque des revendications précédentes, **caractérisé en ce que** lors de l'actionnement de l'élément d'encliquetage (17), il se produit une libération d'un déplacement d'une branche d'étrier (15) du corps de fixation (12) dans une fente (31) entre l'élément de blocage (18) et le corps de connecteur (11) dans la région de l'élément d'encliquetage (17).

5. Connecteur enfichable selon la revendication 4, **caractérisé en ce que** la largeur (61) d'une fente (31) entre l'élément de blocage (18) et l'élément d'encliquetage (17) d'une part et le corps de connecteur (11) d'autre part, en tenant compte d'un jeu nécessaire, correspond essentiellement à l'épaisseur de la branche d'étrier (15) du corps de fixation (12) pouvant être introduite dans la fente (31) et, dans la position de verrouillage du corps de connecteur (11) dans le connecteur conjugué (13), la branche d'étrier (15) est introduite dans la fente (31) entre l'élément de blocage (18) et le corps de connecteur (11) dans une mesure telle qu'un déplacement de l'élément de blocage (18) dans la région de l'élément d'encliquetage (17) vers le corps de connecteur (11) soit bloqué.

6. Connecteur enfichable selon l'une quelconque des revendications 1 à 5, **caractérisé en ce que** l'au moins un élément d'encliquetage (17) présente un profil extérieur réalisé de manière complémentaire avec le profil du contour d'encliquetage (32).

7. Connecteur enfichable selon l'une quelconque des revendications 1 à 6, **caractérisé en ce que** sur le corps de connecteur (11) sont réalisés des éléments de blocage (18) mutuellement opposés par rapport à l'axe de symétrie de celui-ci, chaque élément de blocage portant un élément d'encliquetage (17).

8. Agencement de connexion enfichable comprenant un connecteur enfichable selon la revendication 4 ou 5 et comprenant un connecteur conjugué, en particulier un corps d'injecteur, pour le connecteur enfichable, **caractérisé en ce que** dans le connecteur conjugué (13) est réalisé un contour (30) en amont du contour d'encliquetage (32) dans la direction de déverrouillage, de telle sorte que dans une position de contact de l'élément d'encliquetage (17), le contour (30) presse l'élément d'encliquetage (17) radialement vers la fente adjacente (31), l'élément de blocage (18) accouplé à l'élément d'encliquetage (17) bloquant la fente (31) dans la région de l'élément d'encliquetage (17).

9. Agencement de connexion enfichable selon la revendication 8, **caractérisé en ce que** le contour (30) est réalisé de manière radialement périphérique dans une ouverture (23) du connecteur conjugué (13).

10. Agencement de connexion enfichable selon la revendication 9,' **caractérisé en ce que** le contour d'encliquetage (32) est réalisé sous forme de renfoncement radialement périphérique dans l'ouverture (23) du connecteur conjugué (13), avec un diamètre plus grand par rapport au contour périphérique (30).
